# EUROPÄISCHE PATENTANMELDUNG

(11) **EP 0 765 095 A2**
(43) Veröffentlichungstag der Anmeldung: **26.03.1997**
(21) Anmeldenummer: 96114289.0
(22) Anmeldetag: 05.09.1996
(51) Int. Cl.: H04Q 7/36, H04Q 7/30

(54) **Verfahren zur Zuteilung funktechnischer Ressourcen auf mehrere Übertragungseinrichtungen einer Basisstation innerhalb eines funktechnischen Kommunikationssystems**

(30) Priorität: 22.09.1995 DE 19535360
(71) Anmelder: SIEMENS AKTIENGESELLSCHAFT, 80333 München (DE)
(72) Erfinder: Höfer, Bruno, 81375 München (DE); Färber, Michael, 82515 Wolfratshausen (DE)

(57) **Zusammenfassung**

Dem Problem begrenzter funktechnischer Ressourcen, insbesondere bezüglich der Frequenzkanäle in GSM-Mobilfunksystemen, und der Anforderung einer hohen Auslastung der Ressourcen auch bei Basisstationen mit einer geringen Anzahl von funktechnischen Ressourcen und damit starken Effektivitätsschwankungen beim Zuschalten zusätzlicher funktechnischer Ressourcen wird mit einem Verfahren begegnet, das zusätzliche funktechnische Ressourcen zur Verfügung stellt und diese bei Bedarf auf mehrere Funkbereiche einer Basisstation aufteilt. Die Auslastung der funktechnischen Ressourcen wird damit mit geringem zusätzlichem schaltungstechnischem Aufwand verbessert.

## Beschreibung

In funktechnischen Kommunikationssystemen findet zumindestens ein Teil der Kommunikation zwischen zwei durch das funktechnische Kommunikationssystem vermittelten Kommunikationsendgeräte über eine Luftschnittstelle statt, d.h. über eine Funkverbindung. Eine solche Luftschnittstelle verfügt nur über begrenzte funktechnische Ressourcen. Die funktechnischen Ressourcen, wie der Umfang des zur Verfügung stehende Frequenzspektrum und die zur Verfügung stehende Zeit, müssen insbesondere für die Planung eines funktechnischen Netzes besonders rationell zugeteilt werden.

Das GSM-Mobilfunknetz ist ein derartiges funktechnisches Kommunikationssystem, in dem sich die Luftschnittstelle zwischen ortsfesten Basisstationen und Mobilstationen befindet und die Kommunikation zwischen diesen regelt. Eine Basisstation verfügt dabei über mehrere Übertragungseinrichtungen, die jeweils einen Funkbereich mit funktechnischen Ressourcen versorgen und die für die Kommunikation mit den sich in diesem Funkbereich befindlichen Mobilstationen vorgesehen sind. Die funktechnischen Ressourcen einer Übertragungseinrichtung stellen die Frequenzkanäle dar, wovon zumindest ein Frequenzkanal zur Übertragung der Systeminformation erforderlich ist, und die Zeitlagen innerhalb eines Frequenzkanals, die auf mehrere Mobilstationen, also auf mehrere Kommunikationsendgeräte verteilt werden können.

In einem GSM-Netz wird zumeist Flächendeckung angestrebt, so daß die Funkbereiche der Übertragungseinrichtungen einer Basisstation in der Regel ein geschlossenes Versorgungsgebiet um die Basisstation herum bilden. Die durch die Übertragungseinrichtungen in einer Basisstation verwendeten Frequenzkanäle müssen sich hinsichtlich der Frequenz zur Verhinderung von Interferenzen voneinander unterscheiden, ebenso wie sich die Frequenzkanäle von den Frequenzkanälen benachbarter Funkbereiche anderer Basisstationen, also anderer Funkzellen, unterscheiden müssen. Da einem Netzbetreiber nur eine bestimmte Bandbreite im Frequenzspektrum für das funktechnische Kommunikationssystem zur Verfügung steht, steht er vor der komplexen Aufgabe, die zur Verfügung stehenden funktechnischen Ressourcen, zumeist die Frequenzkanäle, rationell unter Berücksichtigung der Verkehrswerte auf die Basisstationen und letztlich Übertragungseinrichtungen aufzuteilen.

Sind die funktechnischen Ressourcen einer Übertragungseinrichtung vollständig ausgelastet und eine neue Ressourcenanforderung, z.B. für einen weiteren Gesprächsaufbau, liegt vor, so müssen diesem Funkbereich zusätzliche spektrale Ressourcen zur Verfügung gestellt werden. Ein zusätzlicher Frequenzkanal für diesen Funkbereich bedeutet jedoch beim Zeitlagenmultiplexverfahren, daß für den einen Gesprächsaufbauwunsch eine erhebliche Überkapazität an funktechnischen Ressourcen (hier Zeitlagen) angeboten wird, die nicht genutzt wird. Diese angebotene Überkapazität für nur einen Funkbereich führt insbesondere für Basisstationen in Gebieten geringer Nutzung des Funknetzes z.B. in ländlichen Gebieten, wo nur wenige Frequenzkanäle angeboten werden müssen, zu einer deutlichen Verminderung der Effektivität der Auslastung der angebotenen funktechnischen Ressourcen und damit zu einer unrationellen Aufteilung der funktechnischen Ressourcen.

Aus dem Motorola "BSS Equipment Planning Guide" von 1992 ist eine Lösung bekannt, die es ermöglicht, die eingesetzten Baugruppen effizienter zu nutzen. Dies geschieht, indem eine zusätzliche Übertragungseinrichtung einer Basisstation zugeordnet wird, die in der Lage ist, in alle durch die Basisstation und deren Übertragungseinrichtungen realisierte Funkbereiche zu senden oder von dort zu empfangen. Es wird jedoch für jeden Funkbereich der Basisstation eine neue zusätzliche Frequenz, also ein zusätzlicher Frequenzkanal, zugeteilt. Die zusätzliche Übertragungseinrichtung muß also zwischen den Frequenzkanälen zeitlagengetreu umschalten. Damit wird die zusätzliche Übertragungseinrichtung zwar effizienter ausgelastet, da Ressourcenanforderungen aus allen zur Basisstation gehörigen Funkbereichen bedient werden können, jedoch findet eine große Inanspruchnahme von zusätzlichen spektralen Ressourcen (drei zusätzliche Frequenzkanäle) statt. Die spektralen Ressourcen werden dadurch weiterhin ungenügend ausgelastet.

Der Erfindung liegt die Aufgabe zugrunde, für Basisstationen in funktechnischen Systemen die funktechnischen Ressourcen so auf die Übertragungseinrichtungen aufzuteilen, daß eine hohe Auslastung der Ressourcen ermöglicht wird. Diese Aufgabe wird erfindungsgemäß durch das Verfahren nach den Merkmalen des Patentanspruches 1 gelöst. In einem unabhängigen Anspruch wird eine erfindungsgemäße Basisstation angegeben.

Der erfindungswesentliche Aspekt liegt darin, zusätzliche spektrale Ressourcen vorzusehen, die im Fall einer weiteren Ressourcenanforderung bei Nichtverfügbarkeit der bisher zur Verfügung stehenden funktechnischen Ressourcen für zumindest zwei der Übertragungseinrichtungen der Basisstation zur gemeinsamen Nutzung zugeteilt werden. Dies bedeutet, daß die zusätzlichen spektralen Ressourcen durch ihre gleichzeitige Nutzung für mehrere Funkbereiche effizienter ausgenutzt werden.

Für einen Netzbetreiber z.B. in einem GSM-Netz bedeutet dies, daß er z.B. für ein Gebiet in seinem Funknetz, das durch eine Basisstation mit drei sektorisierten Übertragungseinrichtungen versorgt wird, die jeweils einen Frequenzkanal aufweisen, durch die Zuteilung eines zusätzlichen Frequenzkanals für alle drei Funkbereiche unter Zuhilfenahme eines Minimums an zusätzlichen spektralen Ressourcen geringe Überlastspitzen abfangen kann. Das erfindungsgemäße Verfahren eignet sich insbesondere für den Einsatz in GSM- oder DECT-Mobilfunksystemen, in dem die spektralen Ressourcen durch Frequenzkanäle realisiert sind, wobei ein Frequenzkanal in mehrere Zeitlagen unterteilt ist (Zeitlagenmultiplexverfahren), die wiederum auf verschiedene Kommunikationsverbindungen verteilt werden können. Somit ist es möglich, daß die Aufteilung eines zusätzlichen Frequenzkanals auf mehrere Funkbereiche durch Verteilen von Zeitlagen auf einfachste Weise realisiert werden kann.

Nach einer weiteren vorteilhaften Ausprägung des erfindungsgemäßen Verfahrens wird ein 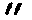 einziger 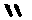 weiterer Frequenzkanal zusätzlich verfügbar gemacht - Anspruch 4. Das erfindungsgemäße Verfahren ist besonders vorteilhaft einsetzbar, wenn nur geringe funktechnische Ressourcen eingesetzt werden sollen. Da gerade das Zuschalten eines zweiten Frequenzkanals einen erheblichen Einbruch der Effektivität des Umgangs mit den spektralen Ressourcen mit sich bringt, kann durch das Zuteilen des einen zusätzlichen Frequenzkanals auf mehrere Funkbereiche der Effektivitätseinbruch vermindert werden.

Die Möglichkeit, einen zusätzlichen Frequenzkanal für mehrere Funkbereiche nutzbar zu machen, kann auch dahingehend ausgenutzt werden, indem dieser zusätzliche Frequenzkanal beim Ausfall eines die Systeminformation tragenden Frequenzkanals einer der bereits vorhandenen Übertragungseinrichtungen als Ersatzkanal eingesetzt werden kann - Anspruch 5. Das funktechnische Kommunikationssystem gewinnt dadurch vorteilhafterweise an Funktionssicherheit.

In einem unabhängigen Anspruch und den darauf rückbezogenen Unteransprüchen wird eine Basisstation angegeben, bei der die funktechnischen Ressourcen derart auf die Übertragungseinrichtungen aufgeteilt werden, daß eine hohe Auslastung der Ressourcen möglich ist.

Das erfindungsgemäße Verfahren und die erfindungsgemäße Basisstation werden im folgenden anhand von Ausführungsbeispielen näher erläutert.

Hierzu zeigen
- FIG 1: Basisstationen mit zugehörigen Einrichtungen zur Realisierung der Funkbereiche, insbesondere einer zusätzlichen Übertragungseinrichtung,
- FIG 2: eine Basisstation nach dem Stand der Technik mit zugehörigen Funkbereichen,
- FIG 3: verschiedene Möglichkeiten zur Aufteilung einer zusätzlichen spektralen Ressource auf ein oder mehrere Funkbereiche,
- FIG 4: die Effektivität der Auslastung der funktechnischen Ressourcen in Abhängigkeit von den zur Verfügung gestellten Frequenzkanälen und den Ressourcenanforderungen,
- FIG 5 bis 9: Blockschaltbilder von Teilen des Sendeteils der Übertragungseinrichtungen der Basisstation und
- FIG 10 und 11: Blockschaltbilder von Teilen des Empfangsteils der Übertragungseinrichtungen einer Basisstation.

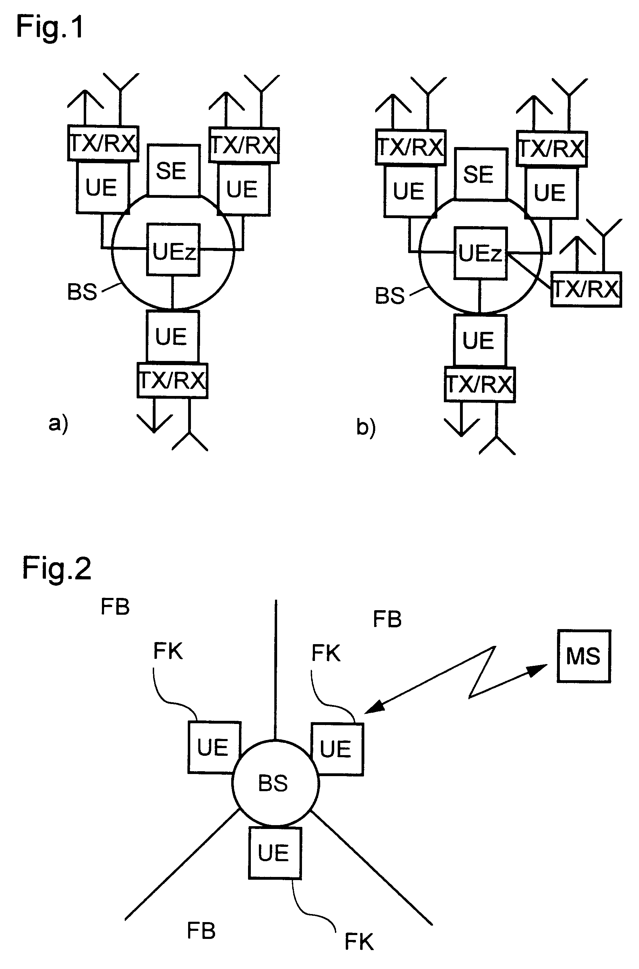

In FIG 2 ist die zum Stand der Technik gehörende sektorisierende Aufteilung des Versorgungsbereiches einer Basisstation BS in z.B. drei Funkbereiche FB verdeutlicht. Zur Basisstation BS gehören drei Übertragungseinheiten UE, die zur Realisierung des zugehörigen Funkbereiches FB jeweils einen Frequenzkanal FK zur Verfügung stellen. Die Basisstation BS ist z.B. Teil eines GSM-Mobilfunksystems, bei dem jeder Frequenzkanal FK in acht bzw. 16 Zeitlagen unterteilt ist (Full-Rate bzw. Half-Rate) und jede Zeitlage einer anderen Mobilstation MS als Kommunikationsendgerät des funktechnischen Systems zugeteilt werden kann. Die Basisstation BS ist über eine Übertragungseinrichtung UE und eine Luftschnittstelle mit einer Mobilstation MS verbunden und ermöglicht so die Vermittlung einer Kommunikationsverbindung von Mobilstation MS zu anderen Endgeräten im Kommunikationsnetz.

In FIG 1 ist angegeben, wie eine Basisstation BS erfindungsgemäß durch eine zusätzliche Übertragungseinheit UEz erweitert wird, um einen zusätzlichen Frequenzkanal FK zur Verfügung zu stellen. Die Basisstation BS wird dabei durch eine Steuereinrichtung SE gesteuert. Es gibt dabei zwei prinzipiell unterschiedliche Lösungen entsprechend den FIG 2 a) und 2 b). In FIG 2 a) verfügen die Übertragungseinrichtungen UE jeweils über einen Sende- und Empfangsteil TX/RX mit den zugehörigen Antennenelementen zur Abstrahlung und zum Empfang der Sende- bzw. Empfangsenergie. Die zusätzliche Übertragungseinrichtung UEz verwendet die Sende- und Empfangsteile TX/RX der anderen Übertragungseinrichtungen UE zur Realisierung des zusätzlichen Frequenzkanals FKz. Im Gegensatz dazu verfügt die zusätzliche Übertragungseinrichtung UEz gemäß FIG 2 b) über einen eigenen Sende- und Empfangsteil TX/RX zur Abstrahlung der Sendeenergie bzw. zum Empfang der Empfangsenergie des zusätzlichen Frequenzkanals FKz.

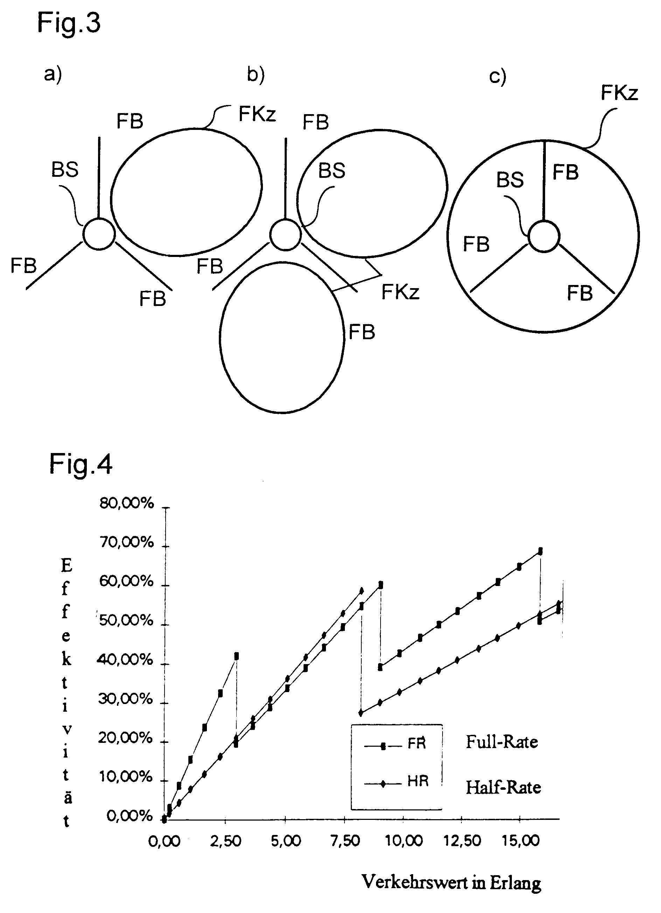

Ein zusätzlicher Frequenzkanal FKz kann dabei, wie in FIG 3 dargestellt, auf unterschiedlichste Weise zur Ergänzung der bereits vorhandenen spektralen Ressourcen FK auf die Funkbereiche FB aufgeteilt werden. Für eine Basisstation BS mit drei Sektoren, also drei Funkbereichen FB, wird ein zusätzlicher Frequenzkanal FKz gemäß FIG 3 b) oder 3 c) mehreren Funkbereichen FB zugeteilt. Dies bedeutet, der zusätzliche Frequenzkanal FKz realisiert zwei oder drei Funkbereiche FB. FIG 3 a) gibt den Fall an, daß durch den Ausfall einer oder mehrerer Frequenzkanäle FK eines Funkbereiches FB die Gewährleistung der Funktion des funktechnischen Kommunikationssystems in diesem Funkbereich FB gefährdet ist, so daß der zusätzliche Frequenzkanal FKz, der prinzipiell für die Versorgung mehrerer Funkbereiche FB vorgesehen ist, zum Ersatz der ausgefallenen Frequenzkanäle FK in nur einem Funkbereich FB eingesetzt wird.

FIG 4 verdeutlicht die Probleme der Effektivität der funktechnischen Ressourcenausnutzung beim Zuschalten zusätzlicher Frequenzkanäle FKz. Die auf die Ordinate aufgetragenen Verkehrswerte erfordern beim Übersteigen eines gewissen Verkehrswertbedürfnisses durch eine weitere Ressourcenanforderung das Zuschalten eines zusätzlichen Frequenzkanals FKz. Der zusätzliche Frequenzkanal FKz wird jedoch bei einer einzigen zusätzlichen Ressourcenanforderung, z.B. einer Aufforderung zu einem Gesprächsaufbau, nur ungenügend ausgelastet. Dies führt dazu, daß die Effektivität der Ressourcenausnutzung erheblich zurückgeht, z.B. für ein GSM-System im Zeitlagenmultiplexverfahren mit einer Full-Rate-Ausnutzung der Frequenzkanäle FK führt das Zuschalten des zweiten Frequenzkanals FK bei einer weiteren Gesprächsanforderung zu einer Verschlechterung der Effektivität von ca. 45 % auf 20 % und für eine Ausnutzung der Frequenzkanäle in Half-Rate von ca. 60 % auf 25 %. Die in diesen Fällen ungenutzten sieben bzw. 15 Zeitlagen könnten im Sinne des erfindungsgemäßen Verfahrens auf weitere Funkbereiche FB, aus denen eventuell ebenfalls weitere Gesprächsaufforderungen vorliegen, aufgeteilt werden.

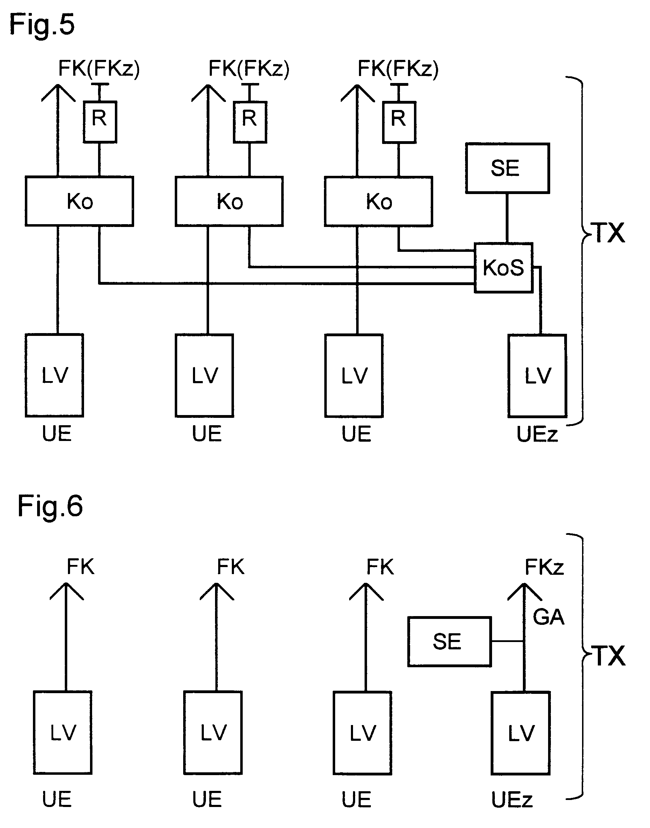

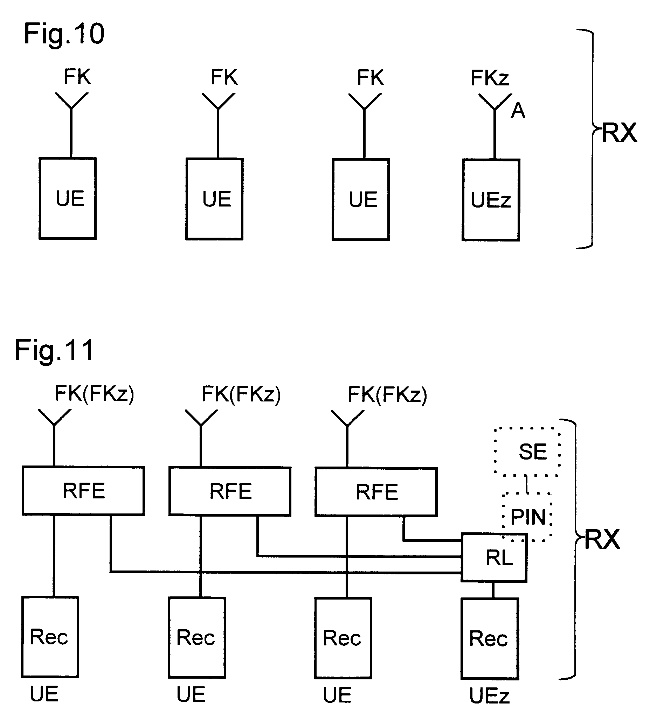

Verschiedene Realisierungsmöglichkeiten der erfindungsgemäßen Basisstation BS mit z.B. drei Sektoren und damit drei durch jeweils eine Übertragungseinrichtung UE realisierten Funkbereich FB werden im folgenden anhand von Blockschaltbildern des Sendeteils TX in den FIG 5 bis 9 und des Empfangsteils RX in den FIG 10 und 11 angegeben. Es ist jedoch auch möglich, daß die Basisstation BS über nur zwei bzw. vier oder mehr Funkbereiche FB verfügt; auch kann der zusätzliche Frequenzkanal FKz nur einem Teil der Funkbereiche FB zur Verfügung gestellt werden. Für Anwendungen innerhalb des GSM- Systems sind die im folgenden geschilderten Lösungen sowohl im Full-Rate als auch im Half-Rate Betrieb realisierbar.

In FIG 5 erzeugen die Leistungsverstärker LV der Übertragungseinheiten UE und der zusätzlichen Übertragungseinheiten UEz die Sendeenergie für die entsprechenden Frequenzkanäle FK. Der Leistungsverstärker LV der zusätzlichen Übertragungseinheit UEz ist mit einem magnetisch gesteuerten Koaxialschalter KoS verbunden. Dieser Koaxialschalter KoS wird durch eine Steuereinrichtung SE zeitlagengemäß gesteuert. Die Sendeenergie des zusätzlichen Frequenzkanals FKz wird durch den Koaxialschalter KoS auf die Koppler Ko der Übertragungseinrichtungen UE zur Abstrahlung auf deren Antennenelemente verteilt. Den Übertragungseinheiten UE zugehörige Koppler Ko sind jeweils mit den Leistungsverstärkern LV und einem Anschluß des Koaxialschalters KoS eingangsseitig verbunden. Die Koppler Ko können auch als Ringleitung ausgeprägt sein. Ein Teil der jeweiligen Sendeenergie wird jeweils durch einen Abschlußwiderstand R absorbiert. Die zusammengeführten Sendeenergien der Frequenzkanäle FK und des zusätzlichen Frequenzkanals FKz werden durch die jeweils mit dem Koppler Ko verbundenen Antennen der jeweiligen Übertragungseinheiten UE abgestrahlt.

In der Basisstation BS gemäß FIG 6 sind die Leistungsverstärker LV der Übertragungseinheiten UE direkt mit den entsprechenden Antennenelementen verbunden und realisieren die zugehörigen Funkbereiche FB durch ein Zurverfügungstellen von Frequenzkanälen FK. Ein Leistungsverstärker LV einer zusätzlichen Übertragungseinheit UEz ist mit einer phasengesteuerten Gruppenantenne GA verbunden. Gesteuert durch eine Steuereinrichtung SE, kann die Sendeenergie des zusätzlichen Frequenzkanals FKz durch entsprechende Phasenansteuerung der einzelnen Antennenelemente der Gruppenantenne GA für mehrere Funkbereiche FB durch zeitlagengemäßes Umschalten genutzt werden. Die Abstrahlungscharakteristik der Gruppenantenne GA wird für jede Zeitlage auf jeweils einen Funkbereich FB ausgerichtet. Nach dieser Ausführungsform der erfindungsgemäßen Basisstation BS muß jedoch (im Gegensatz zur Basisstation BS nach FIG 5) keine hochfrequente Sendeenergie geschaltet werden.

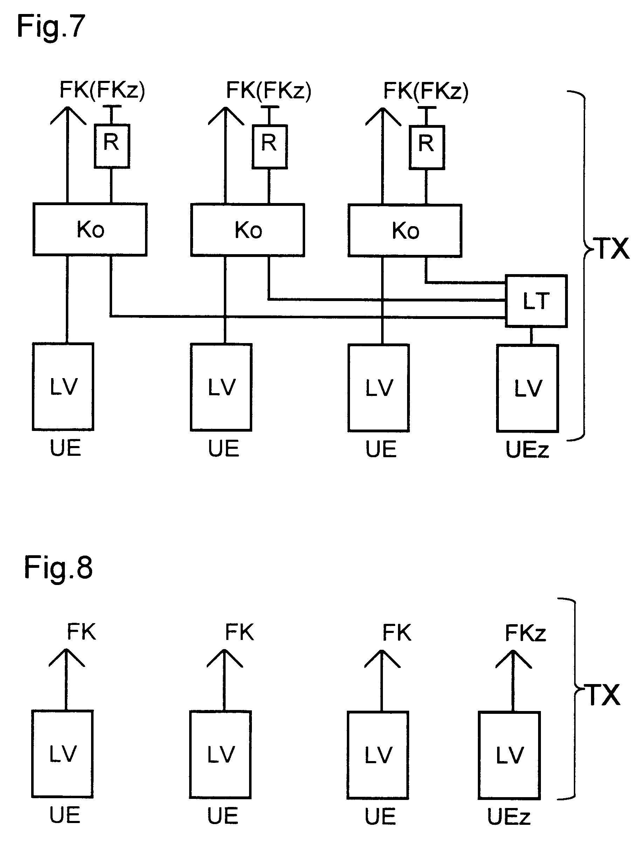

Für die Basisstation BS gemäß FIG 7 sind im Sendeteil TX Leistungsverstärker LV in den Übertragungseinheiten UE jeweils mit einem Koppler Ko, der auch durch eine Ringleitung realisiert werden kann, verbunden. Des weiteren sind die Koppler Ko jeweils mit einem Leistungsverstärker LV einer zusätzlichen Übertragungseinrichtung UEz über einen Leistungsteiler LT verbunden. Im Leistungsteiler LT wird die Sendeenergie des zusätzlichen Frequenzkanals FKz auf die drei Koppler Ko der Übertragungseinheiten UE aufgeteilt. Ein Teil der Sendeenergien wird jeweils in einem Abschlußwiderstand R aufgefangen und die zusammengeführte Sendeenergie der Frequenzkanäle FK der Übertragungseinrichtungen UE und des zusätzlichen Frequenzkanals FKz der zusätzlichen Übertragungseinrichtung UEz jeweils auf die Antennenelemente zur Abstrahlung geführt. Diese Lösung erfordert keinerlei Steuerelemente, es ist jedoch im Gegensatz zu den Basisstationen nach den FIG 5 und 6 kein Ersatz eines die Systeminformation tragenden Frequenzkanals FK nach Ausfall in einem der Funkbereiche FB möglich.

Eine weitere Möglichkeit zur Realisierung einer erfindungsgemäßen Basisstation BS ist in FIG 8 erläutert. Eine zusätzliche Übertragungseinrichtung UEz zur Erzeugung eines zusätzlichen Frequenzkanals FKz mit Leistungsverstärker LV und Antenne ergänzt die vorhandenen Übertragungseinrichtungen UE zur Erzeugung von Frequenzkanälen FK mit Leistungsverstärker LV und Antenne in der Art, daß die Antenne der zusätzlichen Übertragungseinrichtung UEz omnidirektional abstrahlt oder eine zumindest mehrere Funkbereiche FB abdeckende Abstrahlungscharakteristik aufweist. Auch hier werden keine Steuer- oder aktiven Elemente benötigt, doch es ist eine zusätzliche Antennenausrüstung erforderlich und ein Organisationsfrequenzkanalersatz ist nicht möglich.

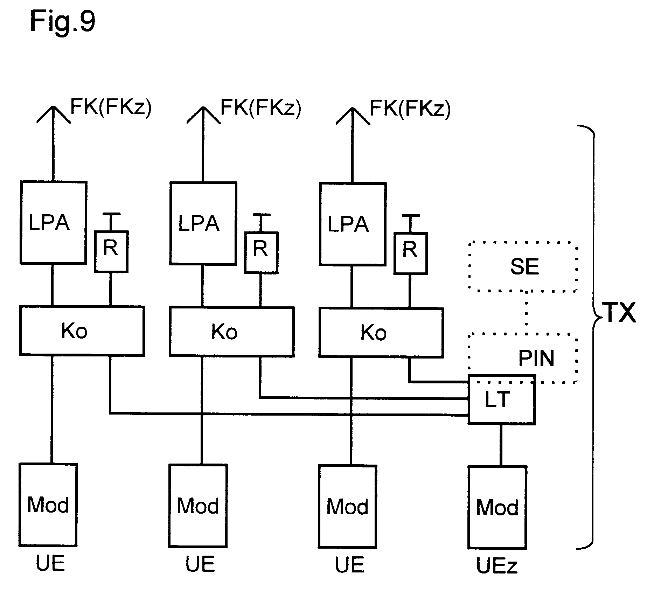

Die Basisstation BS gemäß FIG 9 ist ähnlich der nach FIG 7 gestaltet. Es findet hierbei jedoch das Zusammenführen der Sendeenergie der Frequenzkanäle FK und des zusätzlichen Frequenzkanals FKz vor der Endverstärkung statt. Die von den Modulatoren Mod der Übertragungseinrichtungen UE abgegebene Sendeenergie wird jeweils auf Koppler Ko geführt, die weiterhin eingangsseitig mit einem Leistungsteiler LT verbunden sind. Der Leistungsteiler LT teilt die Sendeenergie des im Modulator Mod der zusätzlichen Übertragungseinrichtung UEz erzeugten Frequenzkanals FKz auf die drei Übertragungseinrichtungen UE auf. Da die Sendeenergie vor der Endverstärkung nicht so leistungsstark ist, kann der Leistungsteiler LT auch durch eine durch eine Steuereinrichtung SE gesteuerte PIN-Diode PIN ersetzt werden. Ausgangsseitig zu den Kopplern Ko wird jeweils ein Teil der zusammengeführten Sendeenergie der Frequenzkanäle FK in Abschlußwiderständen R absorbiert und ein weiterer Teil in linearen Leistungsverstärkern LPA endverstärkt und auf die entsprechenden Antennenelemente des Sendeteils TX geführt. Bei einem Einsatz einer PIN-Diode PIN ist auch bei dieser Ausführungsform des Sendeteils TX ein Ersatz eines ausgefallenen Organisationskanals möglich.

In FIG 10 ist eine Lösung für den Empfangsteil RX einer erfindungsgemäßen Basisstation BS dargestellt. Parallel zu den Empfangsteilen der Übertragungseinrichtungen UE zum Empfang der Frequenzkanäle FK mit den zugehörigen Antennenelementen ist eine zusätzliche Übertragungseinrichtung UEz vorgesehen, die mit einer zusätzlichen Antenne A verbunden ist und die Auswertung des zusätzlichen Frequenzkanals FKz vornimmt. Diese Lösung ist äußerst einfach, jedoch erfordert sie eine zusätzliche Antennenausrüstung.

Bei der Basisstation BS nach FIG 11 wird auf eine zusätzliche Antenne verzichtet. Die Empfangsenergien der Frequenzkanäle FK werden in den Antennen der jeweiligen Übertragungseinrichtungen UE empfangen und jeweils auf die breitbandigen Vorverstärker RFE geführt. Ein Teil der Empfangsenergie wird aus dem Vorverstärker in die entsprechenden Empfänger Rec der Übertragungseinrichtungen UE und zusätzlich ein weiterer Teil der Empfangsenergie in eine Ringleitung RL geführt. Die Ringleitung RL für die Empfangsenergien, die aus den verschiedenen Funkbereichen FB stammen, führt die zusammengeführten Empfangsenergien in den Empfangsteil Rec der zusätzlichen Übertragungseinrichtung UEz. In den Empfangseinrichtungen Rec findet jeweils die Filterung und Verstärkung der Signale der entsprechenden Frequenzkanäle FK, FKz statt. Die Ringleitung RL kann ebenfalls durch eine durch eine Steuereinrichtung SE gesteuerte PIN-Diode PIN ersetzt werden. Diese Lösungen benötigen keinen zusätzlichen Aufwand an Antennenausrüstung, es treten jedoch zusätzliche Verluste auf und eine geringere Sensibilität beim Empfang ist zu verzeichnen.

Die verschiedenen erläuterten Lösungen für den Sendeteil TX und den Empfangsteil RX können beliebig kombiniert werden, sie müssen lediglich auf die gleichen Funkbereiche FB abgestimmt sein. Besonders günstige Kombinationsmöglichkeiten sind das Realisieren einer gesonderten Antenne jeweils im Sende- und Empfangsteil TX/RX für den zusätzlichen Frequenzkanal FKz, sowie das Senden mit Leistungsteiler LT nach den Lösungen aus FIG 7 ode FIG 9 und ein Empfang mit einem Empfangsteil RX nach FIG 11 mit einer PIN-Diode PIN.

## Patentansprüche

1. Verfahren zur Zuteilung funktechnischer Ressourcen auf mehrere Übertragungseinrichtungen (UE) einer Basisstation (BS) innerhalb eines funktechnischen Kommunikationssystems, wobei die Übertragungseinrichtungen (UE) jeweils einen Funkbereich (FB) durch einen Sende- (TX) und Empfangsteil (RX)realisieren,
bei dem
- zusätzliche spektrale Ressourcen (FKz) vorgesehen sind, die
- bei Nichtverfügbarkeit der bisher zur Verfügung stehenden funktechnischen Ressourcen für eine weitere Ressourcenanforderung zumindest für zwei der Übertragungseinrichtungen (UE) zur gemeinsamen Nutzung zugeteilt werden.

2. Verfahren nach Anspruch 1,
**dadurch gekennzeichnet,**
daß das funktechnische Kommunikationssystem als ein im Zeitlangenmulitplexverfahren betriebenes Funksystem ausgeprägt ist und die vorgesehenen zusätzlichen spektralen Ressourcen (FKz) zumindest ein zusätzlicher Frequenzkanal sind.

3. Verfahren nach Anspruch 2,
**dadurch gekennzeichnet,**
daß die Übertragungseinrichtungen (UE) im Zeitlagenmultiplexverfahren betrieben werden und die Zeitlagen des zumindest einen zusätzlichen Frequenzkanals (FKz) auf die zumindest zwei Übertragungseinrichtungen (UE) aufgeteilt werden.

4. Verfahren nach Anspruch 2 oder 3,
**dadurch gekennzeichnet,**
daß ein Frequenzkanal (FKz) zusätzlich verfügbar gemacht wird.

5. Verfahren nach einem der Ansprüche 1 bis 4,
**dadurch gekennzeichnet,**
daß die Nutzung des zusätzlichen Frequenzkanals (FKz) durch die zumindest zwei Übertragungseinrichtungen (UE) eingeschränkt wird und der zusätzliche Frequenzkanal (FKz) zur Versorgung eines einzelnen Funkbereiches (FB) zur Verfügung gestellt wird.

6. Basisstation mit mehreren Übertragungseinrichtungen (UE) innerhalb eines funktechnischen Kommunikationssystems,
wobei die Übertragungseinrichtungen (UE) jeweils einen Funkbereich (FB) realisieren, einen Sende- (TX) und Empfangsteil (RX) umfassen und von einer Steuereinrichtung (SE) gesteuert werden,
in der durch eine zusätzliche Übertragungseinrichtung (UEz) realisierte
- zusätzliche spektrale Ressourcen (FKz) vorgesehen sind, die durch die Steuereinrichtung (SE)
- bei Nichtverfügbarkeit der bisher zur Verfügung stehenden funktechnischen Ressourcen für eine weitere Ressourcenanforderung zumindest für zwei der Übertragungseinrichtungen (UE) zur gemeinsamen Nutzung zugeteilt werden.

7. Basisstation nach Anspruch 6,
in einem im Zeitlagenmultiplexverfahren betriebenen Funksystem,
wobei die zusätzlich vorgesehenen spektralen Ressourcen (FKz) zumindest einen zusätzlichen Frequenzkanal umfassen, dessen Zeitlagen (ZL) auf die zumindest zwei Übertragungseinrichtungen (UE) aufgeteilt werden.

8. Basisstation nach Anspruch 6 oder 7,
**dadurch gekennzeichnet,**
- daß eine zusätzliche, einen Frequenzkanal (FKz) generierende Übertragungseinrichtung (UEz) vorgesehen ist, die im Sendeteil (TX) mit einem Koaxial-Schalter (KoS) verbunden ist, der zur gemeinsamen Nutzung des zusätzlichen Frequenzkanals (FKz) durch die zumindest zwei Übertragungseinrichtungen (UE) zeitlagengemäß die Sendeenergie umschaltet, und
- daß der Koaxial-Schalter (KoS) jeweils mit den Übertragungseinrichtungen (UE) zugehörigen zusätzlichen Ringleitungen oder Koppler (Ko) verbunden ist und damit die Sendeenergie des zumindest einen zusätzlichen Frequenzkanals (FKz) in den Ringleitungen oder Koppler (Ko) mit den Sendeenergien der jeweiligen Übertragungseinrichtungen (UE) zusammengeführt wird.

9. Basisstation nach Anspruch 6 oder 7,
**dadurch gekennzeichnet,**
daß eine zusätzliche, einen Frequenzkanal (FKz) generierende Übertragungseinrichtung (UEz) vorgesehen ist, die im Sendeteil (TX) mit einer zusätzlichen phasengesteuerten Gruppenantenne (GA) verbunden ist, so daß die Gruppenantenne (GA) gesteuert durch die Steuereinrichtung (SE) den zusätzlichen Frequenzkanal (FKz) zwischen den Funkbereichen (FB) zumindest zweier Übertragungseinrichtungen (UE) zeitlagengemäß umschalten kann.

10. Basisstation nach Anspruch 6 oder 7,
**dadurch gekennzeichnet,**
daß eine zusätzliche, einen Frequenzkanal (FKz) generierende Übertragungseinrichtung (UEz) vorgesehen ist, die im Sendeteil (TX) jeweils mit einem Leistungsteiler (LT) verbunden sind, so daß die Sendeenergie des zusätzlichen Frequenzkanals (FKz) über den Leistungsteiler (LT) auf zumindest zwei weitere Übertragungseinrichtungen (UE) aufteilt und
mittels zusätzlicher in den weiteren Übertragungseinrichtungen (UE) angeordneter, mit dem Leistungsteiler (LT) verbundener Ringleitungen oder Koppler (Ko) die Sendeenergie des zusätzlichen Frequenzkanals (FKz) mit den Sendeenergien der jeweiligen Übertragungseinrichtungen (UE) zusammengeführt wird.

11. Basisstation nach Anspruch 6 oder 7,
**dadurch gekennzeichnet,**
daß eine zusätzliche, einen Frequenzkanal (FKz) generierende Übertragungseinrichtung (UEz) vorgesehen ist, die im Sendteil (TX) mit einer zusätzlichen, für die Funkbereiche (FB) der zumindest zwei Übertragungseinrichtungen (UE) vorgesehenen Antenne verbunden ist.

12. Basisstation nach Anspruch 6 oder 7,
**dadurch gekennzeichnet,**
daß im Sendteil (TX) eine zusätzliche, einen Frequenzkanal (FK) generierende Übertragungseinrichtung (UEz) vorgesehen ist, die die Sendeenergie des zusätzlichen Frequenzkanals (FK) vor der Endverstärkung über einen Leistungsteiler (LT) oder eine PIN-Diode (PIN) auf zumindest zwei weitere Übertragungseinrichtungen (UE) aufteilt, und
daß in den übrigen Übertragungseinrichtungen (UE) mit dem Leistungsteiler (LT) oder der PIN-Diode (PIN) verbundene Ringleitungen oder Koppler (Ko) vorgesehen sind, in denen die Sendeenergie des zusätzlichen Frequenzkanals (FKz) mit den Sendeenergien der jeweiligen Übertragungseinrichtungen (UE) jeweils zusammengeführt wird, worauf die Sendeenergien jeweils in einem linearen Leistungsverstärker (LPA) endverstärkt werden.

13. Basisstation nach einem der Ansprüche 8,9 oder 12,
**dadurch gekennzeichnet,**
daß die Steuereinrichtung (SE) derart ausgebildet ist, daß von der Steuereinrichtung (SE) das Zuschalten des zumindest einen zusätzlichen Frequenzkanals (FKz) auf einen bestimmten Funkbereich (FB) gesteuert wird.

14. Basisstation nach Anspruch 13,
**dadurch gekennzeichnet,**
daß durch die Steuereinrichtung (SE) ein zusätzlicher Frequenzkanal (FKz) als Ersatz für einen ausgefallenen, die Systeminformationen übertragenden Frequenzkanal (FK) geschaltet wird.

15. Basisstation nach einem der Ansprüche 8 bis 14,
**dadurch gekennzeichnet,**
daß eine zusätzliche Antenne (A) vorgesehen ist, so daß im Empfangsteil (RX) ein zusätzlicher Frequenzkanal (FKz) über die zusätzliche, die Funkbereiche (FB) von zumindest zwei Übertragungseinrichtungen (UE) realisierende Antenne (A) und eine entsprechende Auswerteschaltung ausgewertet wird.

16. Basisstation nach einem der Ansprüche 8 bis 14,
**dadurch gekennzeichnet,**
daß im Empfangsteil (RX) eine auf die Frequenz des zusätzlichen Frequenzkanals (FKz) abgestimmte, mit den Übertragungseinrichtungen (UE) verbundene Ringleitung (RL) vorgesehen ist, in der die Empfangssignale eines zusätzlichen Frequenzkanals (FKz) nach dem breitbandigen Empfang in der jeweiligen Übertragungseinrichtung (UE) zusammengefaßt werden.

17. Basisstation nach einem der Ansprüche 8 bis 14,
**dadurch gekennzeichnet,**
daß im Empfangsteil (RX) eine PIN-Diode (PIN) vorgesehen ist, die die Empfangssignale eines zusätzlichen Frequenzkanals (FKz) nach dem breitbandigen Empfang in der jeweiligen Übertragungseinrichtung (UE) durch die Steuereinrichtung zeitlagengemäß gesteuert zur weiteren Auswertung zusammenführt.
